# EUROPEAN PATENT SPECIFICATION

(11) **EP 0 999 748 B1**
(45) Date of publication and mention of the grant of the patent: **26.03.2003**
(21) Application number: 98930891.1
(22) Date of filing: 19.06.1998
(51) Int. Cl.: A01N 47/38

(54) **HERBICIDAL COMPOSITIONS OF TETRAZOLINONE HERBICIDES AND ANTIDOTES THEREFOR**
HERBIZIDE ZUSAMMENSETZUNGEN AUS TETRAZOLINONE-HERBIZIDE UND ANTIDOTE DAFÜR
COMPOSITIONS D'HERBICIDES DE TETRAZOLINONE ET ANTIDOTES DE CES COMPOSITIONS

(30) Priority: 16.07.1997 US 895113
(43) Date of publication of application: 17.05.2000
(60) Divisional application: 02017258.1
(73) Proprietor: Syngenta Limited, Guildford Surrey GU2 7YH (GB)
(72) Inventor: SHRIBBS, John, Martin, Richmond, CA 94804-4610 (US); DAGARIN, Derek, Paul, Richmond, CA 94804-4610 (US)
(74) Representative: Waterman, John Richard
(86) International application number: GB9801790
(87) International publication number: WO99003348

(56) References cited:
- EP-A- 0 612 735

## Description

### FIELD OF THE INVENTION

This invention relates to herbicide compositions and methods of use and, more particularly, to certain herbicidal compositions comprising tetrazolinone compounds and antidotes therefor which are useful as herbicides.

### BACKGROUND OF THE INVENTION

An herbicide is a compound which adversely controls or modifies plant growth, e.g., killing, retarding, defoliating, desiccating, regulating, stunting, tillering, stimulating, and dwarfing. The term "plant" refers to all physical parts of a plant, including seeds, seedlings, saplings, roots, tubers, stems, stalks, foliage, and fruits. "Plant growth" includes all phases of development from seed germination to natural or induced cessation of life.

Herbicides are generally used to control or eradicate weed pests. They have gained a high degree of commercial success because it has been shown that such control can increase crop yield and reduce harvesting costs.

The most popular methods of herbicide application include: preplant incorporation into the soil; in-furrow application to seeds and surrounding soil; pre-emergence surface treatment of seeded soil; post-emergence treatment of the plant and soil; and preplant seed treatment.

A manufacturer of an herbicide generally recommends a range of application rates and concentrations calculated to maximize weed control. The range of rates varies from approximately 0.005 to 10 pounds per acre (0.0056 to 56 kilograms per hectare [kg/ha]), and is usually in the range of from 0.05 to 5 pounds per acre (0.056 to 5.6 kg/ha). The term "herbicidally effective amount" describes an amount of an herbicide compound which adversely controls or modifies plant growth. The actual amount used depends upon several considerations, including particular weed susceptibility and overall cost limitations.

An important factor influencing the usefulness of a given herbicide is its selectivity towards crops. In some cases, a beneficial crop is susceptible to the effects of the herbicide. In addition, certain herbicidal compounds are phytotoxic to some weed species but not to others. To be effective, an herbicide must cause minimal damage (preferably no damage) to the beneficial crop while maximizing damage to weed species which infest the locus of the crop.

To preserve the beneficial aspects of herbicide use and to minimize crop damage, many herbicide antidotes have been prepared. These antidotes reduce or eliminate damage to the crop without substantially impairing the damaging effect of the herbicide on weed species. See, for example, U.S. Patents Nos. 4,021,224, 4,021,229 and 4,230,874.

Identification of an antidote which safens an herbicide in crops is a highly complicated task. The precise mechanism by which an antidote reduces herbicidal crop injury has not been established. An antidote compound may be a remedy, interferent, protectant, or antagonist. As used herein, "antidote" describes a compound which has the effect of establishing herbicide selectivity, i.e., continued herbicidal phytotoxicity to weed species by the herbicide, and reduced or non-phytotoxicity to the cultivated crop species. The term "antidotally effective amount" describes an amount of an antidote compound which counteracts to some degree a phytotoxic response of a beneficial crop to an herbicide.

Tetrazolinone compounds have been found to be very effective herbicides with broad general herbicidal activity against broad-leafed and grass weeds by pre- and/or post-emergence application. The method of controlling vegetation with these compounds comprises applying an herbicidally effective amount of the compounds, usually with an inert carrier or diluent, to the area where herbicidal control is desired. However, the herbicidal tetrazolinone compounds have been found in some instances to adversely affect or interfere with the cultivation of crop plants, especially corn and soya crops. Therefore, the effective use of these herbicides for controlling weeds in the presence of such crops is further enhanced by, or may require in many instances, the addition of an antidotally effective amount of a compound, which is antidotally effective with the herbicide.

It has now been discovered that certain compounds when used in an antidotally effective amount are effective antidotes for the protection of crops, especially corn, wheat, rice and soya, from adverse herbicidal injury or the reduction of adverse herbicidal injury caused by the use of an herbicidally effective amount of a tetrazolinone compound. Therefore, it is an object of the present invention to provide compositions of tetrazolinone herbicides in combination with antidotes therefor, which compositions are useful to reduce injury to crops, especially corn, wheat, rice and soya, due to phytotoxicity of these herbicides.

### SUMMARY OF THE INVENTION

The present invention relates to herbicidal compositions comprising herbicidal tetrazolinone compounds and antidotal compounds therefor to reduce injury to various crops, particularly corn, wheat, rice and soya, from the phytotoxic effects of such tetrazolinone herbicides when used alone or in combination with other compounds as co-herbicides.

More particularly, the invention relates to a composition comprising:
(a) an herbicidal tetrazolinone, or an agriculturally acceptable salt thereof;
(b) an antidotally effective amount of an antidote compound which is antidotally effective for said tetrazolinone, wherein the antidote compound is a compound selected from diphenylmethoxy acetic acid, methyl ester; diphenylmethoxyacetic acid and 3,3-diphenylpropionic acid.

The invention further relates to methods for reducing phytotoxicity or injury to crop plants, particularly corn, wheat, rice and soya crops, due to an herbicidal tetrazolinone compound, or salt thereof, by applying an antidotally effective amount of an antidote compound to the soil, crop or crop seed.

### DETAILED DESCRIPTION OF THE INVENTION

Tetrazolinone herbicide compounds useful in the present invention are described in U.S. Patent Nos. 4,618,365; 4,826,529; 4,830,661; 4,956,469; 5,003,075; 5,019,152; 5,342,954; 5,344,814; 5,347,009; 5,347,010; 5,362,704 and 5,466,660 and in European Patent Publication No. 0 672 663 A1; 0 692 482 A2; 0 695 748 A1; 0 708 097 A1 and 0 711 761 A1. Herbicidal tetrazolinone compounds for use in this invention may be prepared by the methods described in the aforementioned patent publications, or by the application and adaptation of known methods used or described in the chemical literature.

Many herbicidal tetrazolinone compounds useful in this invention fall within the general formula 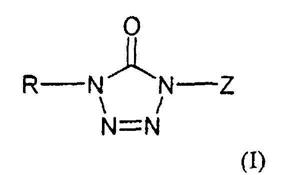 wherein:
R is hydrogen, optionally substituted C₁-C₁₂ alkyl, optionally substituted C₂-C₁₃ alkoxyalkyl, optionally substituted C₁-C₁₂ haloalkyl, optionally substituted C₇-C₉ aralkyl, optionally substituted C₅-C₆cycloalkyl, optionally substituted C₃-C₁₂ alkenyl, optionally substituted aryl, or optionally substituted heteroaryl;
Z is hydrogen, C₁-C₅ alkylcarbonyl, C₂-C₅ alkoxycarbonyl, S(O)ₙ optionally substituted phenyl or C(O)NR¹R² wherein R¹ and R² are the same or different and are selected from the group consisting of: hydrogen, optionally substituted C₁-C₆ alkyl, optionally substituted C₃-C₆ alkenyl, optionally substituted C₅-C₆ cycloalkyl and optionally substituted C₇-C₉ aralkyl; n is 0, 1 or 2; or
R¹ and R² together with the nitrogen to which they are attached form an optionally substituted saturated or unsaturated 5 or 6 membered heterocyclic ring wherein the ring members are selected from nitrogen, carbon, oxygen and sulfur;
or an agriculturally acceptable salt thereof which possesses herbicidal properties.

Compounds of formula I(a) are among the more preferred class of compounds 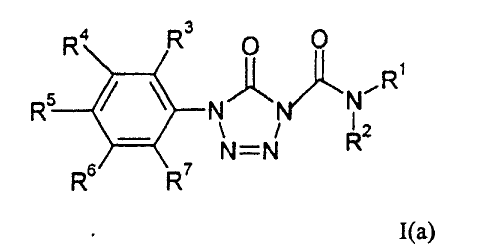 wherein R¹ and R² are either the same or different and are selected from the group consisting of hydrogen, optionally substituted C₁-C₁₂ alkyl, optionally substituted C₃-C₆ alkenyl, optionally substituted C₂-C₁₃ alkoxyalkyl, optionally substituted C₁-C₁₂ haloalkyl and optionally substituted C₅-C₆ cycloalkyl; and
R³, R⁴, R⁵, R⁶ and R⁷ are either the same or different and are selected from the group consisting of hydrogen, halogen, optionally substituted C₁-C₁₂ alkyl, optionally substituted C₂-C₁₃ alkoxyalkyl, optionally substituted C₁-C₁₂ haloalkyl and optionally substituted C₅-C₆ cycloalkyl.

Preferred compounds are those in which R' and R² are the same or different and are selected from the group consisting of hydrogen, C₁-C₆ alkyl, C₃-C₆ alkenyl, C₁-C₁₂ haloalkyl and C₅-C₆ cycloalkyl; and R³, R⁴, R⁵, R⁶ and R⁷ are selected from the group consisting of hydrogen, halogen, C₁-C₆ alkyl, and C₁-C₁₂ haloalkyl.

Especially preferred compounds have the following formula I(b): 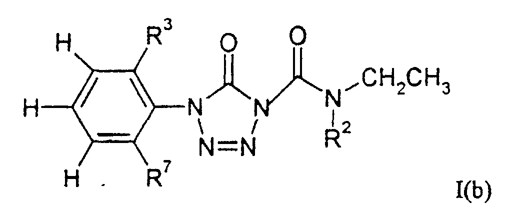 wherein R³ is chloro or ethyl; R⁷ is hydrogen or chloro and R² is ethyl or cyclohexyl; or an agriculturally acceptable salt thereof.

By the term "agriculturally acceptable salts" is meant salts the cations or anions of which are known and accepted in the art for the formation of salts for agricultural or horticultural use. Preferably the salts are water-soluble. Suitable acid addition salts, formed by compounds of formula (I) containing an amino group, include salts with inorganic acids, for example, hydrochlorides, sulphates, phosphates and nitrates and salts with organic acids, for example, acetic acid. Suitable salts formed by compounds of formula (I) which are acidic, i.e., compounds containing one or more carboxy groups, with bases including alkali metal (e.g. sodium and potassium) salts, alkaline earth metal (e.g. calcium and magnesium) salts and ammonium and amine (e.g. diethanolamine, triethanolamine, octylamine, dioctylmethylamine and morpholine) salts.

As employed herein, the word "substituted " is intended to mean that the "substituted" group has one or more of the following substituents: halogen (i.e., fluorine, chlorine, bromine and iodine); C₁-C₄ alkyl; C₁-C₄ alkylthio; C₁-C₄ alkoxy; (C₁-C₄)alkoxy-(C₁-C₄)alkyl; (C₁-C₆)alkoxyCO-; C₁-C₄ alkyl-S(O)ₚ-; nitro; nitrile; cyano: carboxy and salts, amides and esters thereof; alkanoyl of 2 to 4 carbon atoms; amino optionally substituted with one or two C₁-C₄ alkyl; phenyl optionally substituted with one or more C₁-C₄ alkyl, C₁-C₄ alkoxy, C₁-C₄ alkyl-S(O)ₚ-, nitro, halogen, fluorine. chlorine, bromine, cyano, or CF₃ groups; a five or six membered heterocyclic ring containing one or more heteroatoms selected from O, N or S; a five or six membered heterocyclic ring containing one or more heteroatoms selected from O, N or S optionally substituted with one or more C₁-C₄ alkyl, C₁-C₄ alkoxy, C₁-C₄ alkyl-S(O)ₚ-, nitro, halogen, fluorine, chlorine, bromine, cyano, or CF₃ groups; wherein p is 0, 1 or 2.

The term "optionally substituted aryl" is intended to include aryl groups, such as phenyl, naphthyl, benzyl and phenoxy which are unsubstituted or are substituted with one or more of the foregoing substituents. Similarly, the term "optionally substituted heteroaryl" is intended to include heteroaryl groups, such as pyridyl, pyrimidyl, triazinyl, thienyl, furyl and thiazolyl, which are unsubstituted or are substituted with one or more of the substituents listed above.

In the above definitions, the term "halogen" includes fluoro, chloro, bromo, and iodo groups. In polyhalogenated groups, the halogens may be the same or different.

This invention embodies a two-part herbicidal system comprised of (a) a tetrazolinone herbicide as described hereinabove and (b) an effective antidote therefor. It has been found that such antidote compounds can be selected from a wide range of chemical substances that have been found to be effective as herbicide antidotes for the above-described tetrazolinone herbicides. The preferred compositions of this invention may include any one or more of such antidotes with the herbicides. The variety of crops on which the above-described herbicides is useful can be significantly broadened by the use of an antidote to protect one or more crops from injury therefrom and render the composition more selective against weeds.

Diphenyl-methoxyacetic acid is disclosed in U.S. Patent No. 5,162,537.

3,3-diphenylpropionic acid is disclosed in U.S. Patent No. 6,071,856.

Herbicidal compositions according to this invention may also contain one or more additional pesticidally active ingredients. Herbicides which may be used as co-herbicides with tetrazolinone compounds of formula (I) with benefit in combination with an antidote as described herein include, preferably, thiocarbamates (including dithiocarbamates), α-haloacetamides, heterocyclyl phenyl ethers, imidazolinones, pyridines and sulfonylureas. it is within the purview of this invention that other classes of herbicides, e.g., triazines, ureas, diphenyl ethers, nitroanilines, thiazoles, pyrrolidinones, aromatic and heterocyclic di- and triketones, etc., the individual members of which classes may be derivatives having one or more substituents selected from a wide variety of radicals may suitably be used a co-herbicides. Such combinations can be used to obtain selective weed control with low crop injury in several varieties of crop plants such as corn, grain sorghum, and cereals such as wheat, rice, barley, oats and rye, as well as several varieties of oil-seed crops such as soybeans and cotton. Insecticides, such as synthetic pyrethroids, fungicides, such as carbamates and triazoles and nematicides may also be included in the herbicidal compositions of this invention.

Effective weed control coupled with low crop injury is a result of treatment of a plant locus with a combination of an herbicidal tetrazolinone compound and an antidote compound in accordance with the present invention. By application to the "plant locus" is meant application to the plant growing medium, such as soil, as well as to the seeds, emerging seedlings, roots, stems, leaves, or other plant parts.

The phrase "combination of an herbicidal tetrazolinone compound and an antidote compound" includes various methods of treatment. For example, the soil of a plant locus may be treated with a "tank-mix" composition containing a mixture of the herbicide and the antidote which is "in combination." Or, the soil may be treated with the herbicide and antidote compounds separately so that the "combination" is made on, or in, the soil. After such treatments of the soil with a mixture of herbicide and antidote or by separate or sequential application of the herbicide and the antidote to the soil, the herbicide and antidote may be mixed into or incorporated into the soil either by mechanical mixing of the soil with implements or by "watering in" by rainfall or irrigation. The soil of a plant locus may also be treated with antidote by application of the antidote in a dispersible-concentrate form such as a granule. The granule may be applied to a furrow which is prepared for receipt of the crop seed and the herbicide may be applied to the plant locus either before or after in-furrow placement of the antidote-containing granule so that the herbicide and antidote form a "combination." Crop seed may be treated or coated with the antidote compound either while the crop seed is in-furrow just after seeding or, more commonly, the crop seed may be treated or coated with antidote prior to seeding into a furrow. The herbicide may be applied to the soil plant locus before or after seeding and a "combination" is made when both herbicide and an antidote-coated seed are in the soil. Also contemplated as a "combination" is a commercially-convenient association or presentation of herbicide and antidote. For example, the herbicide and antidote components in concentrated form may be contained in separate containers, but such containers may be presented for sale or sold together as a "combination." Or, the herbicide and antidote components in concentrated form may be in a mixture in a single container as a "combination." Either such a "combination" may be diluted or mixed with adjuvants suitable for soil applications. Another example of a commercially-presented combination is a container of antidote-coated crop seed sold, or presented for sale, along with a container of herbicide material. These containers may, or may not, be physically attached to each other, but nonetheless constitute a "combination of herbicide and antidote" when intended for use ultimately in the same plant locus.

In the foregoing description of various modes of application of the herbicide-antidote combinations, it is inherent that each form of application requires that in some manner, the herbicide and antidote will physically combine to form a "composition" of those agents.

The amount of a particular tetrazolinone herbicide to be applied to the plant locus or crop-growing area will vary with, *inter alia,* the nature of the weeds, the particular herbicide used, the time of application, the climate and the nature of the crop. Application rates of between about 0.01 kg/ha and 5.0 kg/ha of tetrazolinone herbicide are generally suitable, with a rate of about 0.1 kg/ha to 4.0 kg/ha being preferred, and about 0.1 kg/ha to 3.0 kg/ha being especially preferred.

The amount of a given antidote to be utilized in combination with the herbicide according to this invention and the manner of its utilization and resulting efficacy can vary according to various parameters, such as the particular antidote to be employed, the crop which is to be protected, the amount or rate of herbicide to be applied, and the soil and climatic conditions of the agricultural environment in which the combination is to be applied. The selection of a specific antidote for use in the herbicide composition, the manner in which it is to be applied (e.g., tank-mix, in-furrow application, seed treatment, etc.), the determination of activity which is non-phytotoxic but antidotally-effective, and the amount necessary to provide this result, can be readily performed utilizing the test procedures in the cited patents, such as U.S. Patent No. 4,021,224, in accordance with common practice in the art.

For other descriptions of antidotes and methods of their use, reference is made to U.S. Patent No. 3,959,304; U.S. Patent No. 3,989,503; U.S. Patent No. 3,131,509; U.S. Patent No. 3,564,768; U.S. Patent No. 4,137,070; U.S. Patent No. 4,294,764; U.S. Patent No. 4,256,481; U.S. Patent No. 4,415,353; and U.S. Patent No. 4,415,352.

The antidote is applied in combination with the herbicide in a non-phytotoxic antidotally effective amount. By "non-phytotoxic" is meant an amount of the antidote which causes at most minor or no injury to the desired crop species. By "antidotally-effective" is meant an antidote used in an amount which is effective as an antidote with the herbicide to decrease the extent of injury caused by the herbicide to the desired crop species.

The ratio of herbicide to antidote may vary depending upon the crop to be protected, weed to be inhibited, herbicide used, etc., but normally an herbicide-to-antidote ratio ranging from 1:25 to 60:1 parts by weight may be employed, although much higher rates of antidote may be used, e.g., 1:100 to 1:300 parts by weight of herbicide to-antidote. The preferred weight ratio of herbicide-to-antidote is from about 1:10 to about 30:1. Another preferred weight ratio range is from about 1:1 to about 20:1. with an even more preferred weight ratio range being from about 2:1 to about 15:1.

In field applications, the herbicide, antidote, or a mixture thereof, may be applied to the plant locus without any adjuvants other than a solvent. Usually, the herbicide, antidote, or mixture thereof, is applied in conjunction with one or more adjuvants in liquid or solid form. Compositions or formulations containing mixtures of an appropriate herbicide and antidote usually are prepared by admixing the herbicide and antidote with one or more adjuvants such as diluents, solvents, extenders, carriers, conditioning agents, water, wetting agents. dispersing agents, or emulsifying agents, or any suitable combination of these adjuvants These mixtures can be in the form of particulate solids, granules, pellets, wettable powders, dusts, solutions, aqueous dispersions, or emulsions.

Application of the herbicide, antidote, or mixture thereof, can be carried out by conventional techniques utilizing, for example, hand-carried or tractor-mounted spreaders, power dusters, boom and hand sprayers, spray dusters, and granular applicators. If desired, application of the compositions of the invention to plants can be accomplished by incorporating the compositions in the soil or other media.

The following examples are for illustrative purposes only and are not intended as necessarily representative of the overall testing performed and are not intended to limit the invention in any way. As one skilled in the art is aware, in herbicidal testing, a significant number of factors that are not readily controllable can affect the results of individual tests and render them non-reproducible. For example, the results may vary depending on environmental factors, such as amount of sunlight and water, soil type, pH of the soil, temperature, and humidity, among other factors. Also, the depth of planting, the application rate of the herbicide, the application rate of the antidote, and the ratio of the herbicide-to-antidote application, as well as the nature of crops being tested, can affect the results of the test. Results may vary from crop to crop within the crop varieties.

### EXAMPLE I

The following example describes a post flooding post emergence herbicidal screening test. Seeds of one weed specie were seeded into small pots. The pots were previously filled with clay soil which contained 2.2% organic matter and had a pH of 5.7. The weed specie was *Echinochloa crus-galli* ("ECHCG") at two growth stages (2-leaf and 3-leaf). In addition, the rice hybrid "Kosihikara" (*Oryza sativa*) was also seeded and the testing done at the 3-leaf stage.

The pots were placed into plastic tubs, lined with a plastic bag. The rice pots were placed into the tubs with the weed specie. The tubs were flooded with water to a depth of 2-3 cm above the pots.

The water inside the tubs was injected with the following antidote compounds diphenylmethoxyacetic acid (*safener 3*); and 3,3-diphenylpropionic acid (*safener 4*) at a rate as indicated in Table 4. Next, the herbicide 1-(2-ethylphenyl)-4-(N,N-diethyl carbamoyl)-5(4H)-tetrazolinone (*cmp 2*) dissolved in acetone was injected at a rate of 0.063, 0.25, 0.50 and/or 1 kg per hectare. The degree of weed control was evaluated and recorded 27 days after treatment as a percentage of weed control as compared to the growth of the same species of the same age in an untreated control flat. Percent control is the total injury to the plants due to all factors including: inhibited emergence, stunting, malformation, albinism, chlorosis and other types of plant injury. The control ratings range from 0 to 100 percent, where 0 represents no effect with growth equal to the untreated control and where 100 represents complete kill. Representative results of the inventive compounds are shown in Table 4.

**TABLE 4**

| **TREATMENT** | | **% PLANT INJURY** | | |
|---|---|---|---|---|
| CMP 2 (g/ha) | Safener (g/ha) | ECHCG 2 leaf | ECHCG 3 leaf | ORYSA |
| 250 | None | 99 | 99 | 23 |
| 250 | Safener 3 (500g/ha) | 100 | 92 | 5 |
| 250 | Safener 4 (750 g/ha) | 100 | 98 | 3 |

As may be seen from the above tables, , rice injury was reduced 9-20 % with the safeners employed.

### EXAMPLE II

The following example describes a post flooding, post emergence herbicidal screening test conducted similarly to Example III. The tubs were flooded 24 hours before application of the herbicides.

Herbicides used were compounds 1 and 2 and 1-(2-chlorophenyl)-4-(N-ethyl,N-cyclohexyl carbamoyl)-5(4H)-tetrazolinone (compound 3). Safeners used were safeners 3 and 4 as in Example L

Results are shown in Table 5.

**TABLE 5**

| **TREATMENT** | | **% PLANT INJURY** | | |
|---|---|---|---|---|
| Herbicide (g/ha) | Safener (g/ha) | ECHCG 2 leaf | ECHCG 3 leaf | ORYSA |
| CMP 1 250 g/ha | -- | 100 | 100 | 73 |
| CMP 1 250 g/ha | Safener 3, (500 g/ha) | 100 | 100 | 38 |
| CMP 1 250 g/ha | Safener 4 (750 g/ha) | 100 | 100 | 2 |
| CMP 2 63 g/ha | -- | 100 | 98 | 22 |
| CMP 2 63 g/ha | Safener 3 (500 g/ha) | 98 | 83 | 17 |
| CMP 2 63 g/ha | Safener 4 (750 g/ha) | 100 | 83 | 14 |
| CMP 3 2000 g/ha | -- | 100 | 100 | 47 |
| CMP 3 2000 g/ha | Safener 3 (500 g/ha) | 100 | 100 | 22 |
| CMP 3 2000 g/ha | Safener 4 (750 g/ha) | 100 | 100 | 28 |

As seen from the above data, the safeners reduced injury to rice from these herbicides.

## Claims

1. An herbicidal composition comprising:
(a) an herbicidally effective amount of an herbicidal tetrazolinone compound of the formula 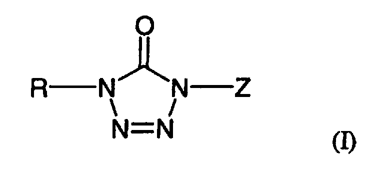 wherein:
R is hydrogen, optionally substituted C₁-C₁₂ alkyl, optionally substituted C₂-C₁₃ alkoxyalkyl, optionally substituted C₁-C₁₂ haloalkyl, optionally substituted C₇-C₉ aralkyl, optionally substituted C₅-C₆ cycloalkyl, optionally substituted C₃-C₁₂ alkenyl, optionally substituted aryl, and optionally substituted heteroaryl,
Z is hydrogen, C₁-C₅ alkylcarbonyl, C₂-C₅ alkoxycarbonyl, S(O)ₙ optionally substituted phenyl or C(O)NR¹R² wherein R¹ and R² are the same or different and are selected from the group consisting of: hydrogen, optionally substituted C₁-C₆ alkyl, optionally substituted C₃-C₆ alkenyl, optionally substituted C₅-C₆ cycloalkyl and optionally substituted C₇-C₉ aralkyl; n is 0, 1 or 2; or
R¹ and R² together with the nitrogen to which they are attached form an optionally substituted saturated or unsaturated 5 or 6 membered heterocyclic ring wherein the ring members are selected from nitrogen, carbon, oxygen and sulfur;
or an agriculturally acceptable salt thereof, and
(b) an antidotally effective amount of an antidote compound which is antidotally effective for said tetrazolinone, wherein the antidote compound is a compound selected from diphenylmethoxy acetic acid, methyl ester; diphenylmethoxyacetic acid and 3,3-diphenylpropionic acid.

2. An herbicidal composition according to claim 1, wherein component (a) is a tetrazolinone of formula I(a) 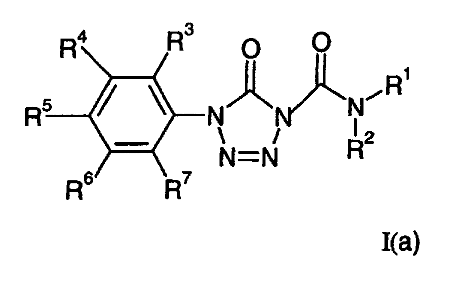 wherein R¹ and R² are either the same or different and are selected from the group consisting of hydrogen, optionally substituted C₁-C₁₂ alkyl, optionally substituted C₃-C₆ alkenyl, optionally substituted C₂-C₁₃ alkoxyalkyl, optionally substituted C₁-C₁₂ haloalkyl and optionally substituted C₅-C₆ cycloalkyl; and
R³, R⁴, R⁵, R⁶ and R⁷ are either the same or different and are selected from the group consisting of hydrogen, halogen, optionally substituted C₁-C₁₂ alkyl, optionally substituted C₂-C₁₃ alkoxyalkyl, optionally substituted C₁-C₁₂ haloalkyl and optionally substituted C₅-C₆ cycloalkyl.

3. An herbicidal composition according to claim 1, wherein component (a) is a tetrazolinone of formula I(b) 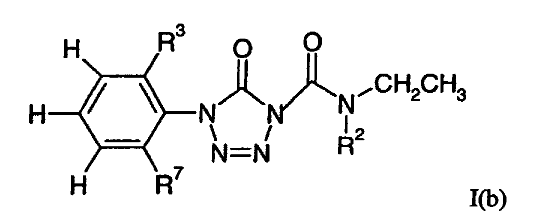 wherein R³ is chloro or ethyl; R⁷ is hydrogen or chloro and R² is ethyl or cyclohexyl; or an agriculturally acceptable salt thereof.

4. A method of reducing injury to crops by a tetrazolinone herbicide, which comprises applying to the soil, crop or seed a non-phytotoxic antidotally effective amount of an antidote compound which is antidotally effective for said tetrazolinone herbicide, wherein said antidote compound is a compound selected from diphenylmethoxy acetic acid, methyl ester; diphenylmethoxyacetic acid and 3,3-diphenylpropionic acid.

5. A method according to claim 4, wherein the crop is corn, wheat, rice or soya.

6. A method according to any of claims 4 or 5, in which the tetrazolinone herbicide has the formula 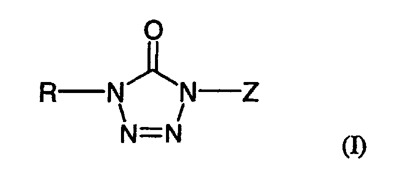 wherein:
R is hydrogen, optionally substituted C₁-C₁₂ alkyl, optionally substituted C₂-C₁₃ alkoxyalkyl, optionally substituted C₁-C₁₂ haloalkyl, optionally substituted C₇-C₉ aralkyl, optionally substituted C₅-C₆ cycloalkyl, optionally substituted C₃-C₁₂ alkenyl, optionally substituted aryl, or optionally substituted heteroaryl;
Z is hydrogen, C₁-C₅ alkylcarbonyl, C₂-C₅ alkoxycarbonyl, S(O)ₙ optionally substituted phenyl or C(O)NR¹R² wherein R¹ and R² are the same or different and are selected from the group consisting of: hydrogen, optionally substituted C₁-C₆ alkyl, optionally substituted C₃-C₆ alkenyl, optionally substituted C₅-C₆ cycloalkyl and optionally substituted C₇-C₉ aralkyl; n is 0, 1 or 2; or
R¹ and R² together with the nitrogen to which they are attached form an optionally substituted saturated or unsaturated 5 or 6 membered heterocyclic ring wherein the ring members are selected from nitrogen, carbon, oxygen and sulfur or an agriculturally acceptable salt thereof.

## Patentansprüche

1. Herbizide Zusammensetzung, umfassend:
(a) eine herbizid wirksame Menge einer herbiziden Tetrazolinonverbindung der Formel 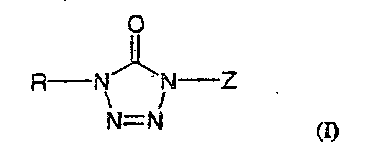 wobei:
R Wasserstoff, gegebenenfalls substituiertes C₁-C₁₂-Alkyl, gegebenenfalls substituiertes C₂-C₁₃-Alkoxyalkyl, gegebenenfalls substituiertes C₁-C₁₂-Halogenalkyl, gegebenenfalls substituiertes C₇-C₉-Aralkyl, gegebenenfalls substituiertes C₅-C₆-Cycloalkyl, gegebenenfalls substituiertes C₃-C₁₂-Alkenyl, gegebenenfalls substituiertes Aryl, und gegebenenfalls substituiertes Heteroaryl ist,
Z Wasserstoff, C₁-C₅-Alkylcarbonyl, C₂-C₅-Alkoxycarbonyl, S(O)ₙ, gegebenenfalls substituiertes Phenyl oder C(O)NR¹R² ist, wobei R¹ und R² gleich oder unterschiedlich sind und ausgewählt sind aus: Wasserstoff, gegebenenfalls substituiertem C₁-C₆-Alkyl, gegebenenfalls substituiertem C₃-C₆-Alkenyl, gegebenenfalls substituiertem C₅-C₆-Cycloalkyl und gegebenenfalls substituiertem C₇-C₉-Aralkyl; n 0, 1 oder 2 ist; oder
R¹ und R² zusammen mit dem Stickstoffatom, an das sie gebunden sind, einen gegebenenfalls substituierten gesättigten oder ungesättigten 5- oder 6-gliedrigen heterocyclischen Ring bilden, wobei die Ringglieder aus Stickstoff, Kohlenstoff, Sauerstoff und Schwefel ausgewählt sind;
oder einem landwirtschaftlich verträglichen Salz davon, und
(b) eine giftabtreibend wirkende Menge einer Antidotverbindung, die giftabtreibend auf das Tetrazolinon wirkt, wobei die Antidotverbindung eine Verbindung ist, die aus Diphenylmethoxyessigsäure, Methylester; Diphenylmethoxyessigsäure und 3,3-Diphenylpropionsäure ausgewählt ist.

2. Herbizide Zusammensetzung gemäß Anspruch 1, wobei der Bestandteil (a) Tetrazolinon der Formel I(a) ist 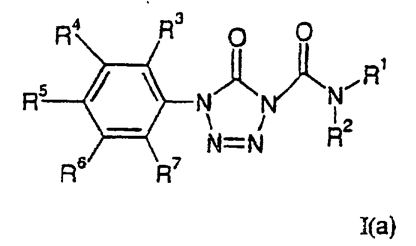 wobei R¹ und R² entweder gleich oder unterschiedlich sind und ausgewählt sind aus: Wasserstoff, gegebenenfalls substituiertem C₁-C₁₂-Alkyl, gegebenenfalls substituiertem C₃-C₆-Alkenyl, gegebenenfalls substituiertem C₂-C₁₃-Alkoxyalkyl, gegebenenfalls substituiertem C₁-C₁₂-Haloalkyl und gegebenenfalls substituiertem C₅-C₆-Cycloalkyl; und
R³, R⁴, R⁵, R⁶ und R⁷ entweder gleich oder unterschiedlich sind und ausgewählt sind aus: Wasserstoff, Halogen, gegebenenfalls substituiertem C₁-C₁₂-Alkyl, gegebenenfalls substituiertem C₂-C₁₃-Alkoxyalkyl, gegebenenfalls substituiertem C₁-C₁₂-Haloalkyl und gegebenenfalls substituiertem C₅-C₆ Cycloalkyl.

3. Herbizide Zusammensetzung gemäß Anspruch 1, wobei der Bestandteil (a) Tetrazolinon der Formel I(b) ist 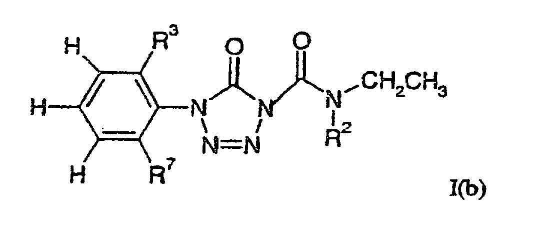 wobei R³ Chlor oder Ethyl ist; R⁷ Wasserstoff oder Chlor ist und R² Ethyl oder Cyclohexyl ist; oder ein landwirtschaftlich verträgliches Salz davon.

4. Verfahren zur Verringerung von Schäden bei Feldfrüchten durch ein Tetrazolinonherbizid, welches umfasst das Aufbringen auf den Boden, das Getreide oder das Saatgut einer nichtphytotoxischen giftabtreibend wirkenden Menge einer Antidotverbindung, die giftabtreibend auf das Tetrazolinonherbizid wirkt, wobei die Antidotverbindung eine Verbindung ist, die aus Diphenylmethoxyessigsäure, Methylester; Diphenylmethoxyessigsäure und 3,3-Diphenylpropionsäure ausgewählt ist.

5. Verfahren gemäß Anspruch 4, wobei die Feldfrüchte Mais, Weizen, Reis oder Soja sind.

6. Verfahren gemäß einem der Ansprüche 4 oder 5, wobei das Tetrazolinonherbizid die Formel 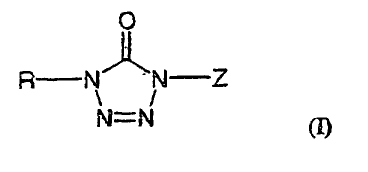 hat, wobei:
R Wasserstoff, gegebenenfalls substituiertes C₁-C₁₂-Alkyl, gegebenenfalls substituiertes C₂-C₁₃-Alkoxyalkyl, gegebenenfalls substituiertes C₁-C₁₂-Halogenalkyl, gegebenenfalls substituiertes C₇-C₉-Aralkyl, gegebenenfalls substituiertes C₅-C₆-Cycloalkyl, gegebenenfalls substituiertes C₃-C₁₂-Alkenyl, gegebenenfalls substituiertes Aryl, und gegebenenfalls substituiertes Heteroaryl ist,
Z Wasserstoff, C₁-C₅-Alkylcarbonyl, C₂-C₅-Alkoxycarbonyl, S(O)ₙ, gegebenenfalls substituiertes Phenyl oder C(O)NR¹R² ist, wobei R¹ und R² gleich oder unterschiedlich sind und ausgewählt sind aus: Wasserstoff, gegebenenfalls substituiertem C₁-C₆-Alkyl, gegebenenfalls substituiertem C₃-C₆-Alkenyl, gegebenenfalls substituiertem C₅-C₆-Cycloalkyl und gegebenenfalls substituiertem C₇-C₉-Aralkyl; n 0, 1 oder 2 ist; oder
R¹ und R² zusammen mit dem Stickstoffatom, an das sie gebunden sind, einen gegebenenfalls substituierten gesättigten oder ungesättigten 5- oder 6-gliedrigen heterocyclischen Ring bilden, wobei die Ringglieder aus Stickstoff, Kohlenstoff, Sauerstoff und Schwefel ausgewählt sind;
oder ein landwirtschaftlich verträgliches Salz davon.

## Revendications

1. Composition herbicide comprenant :
(a) une quantité herbicide efficace d'un composé herbicide de tétrazolinone ayant la formule 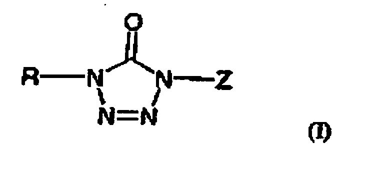 dans laquelle :
R est hydrogène, C₁-C₁₂ alkyle éventuellement substitué, C₂-C₁₃ alkoxyalkyle éventuellement substitué, C₁-C₁₂ haloalkyle éventuellement substitué, C₇-C₉ aralkyle éventuellement substitué, C₅-C₆ cycloalkyle éventuellement substitué, C₃-C₂ alkényle éventuellement substitué, aryle éventuellement substitué ou hétéroaryle éventuellement substitué.
Z est hydrogène, C₁-C₅ alkylcarbonyle, C₂-C₅ alkoxycarbonyle, S(O)ₙ phényle éventuellement substitué ou C(O)NR¹R² où R¹ et R² sont les mêmes ou différents et sont choisis parmi : hydrogène C₁-C₆ alkyle éventuellement substitué, C₃-C₆ alkényle éventuellement substitué, C₅-C₆ cycloalkyle éventuellement substitué et C₇-C₉ aralkyle éventuellement substitué ; n est 0, 1 ou 2 ; ou bien
R¹ et R² pris ensemble avec l'azote auquel ils sont fixés forment un noyau hétérocyclique saturé ou insaturé éventuellement substitué à 5 ou 6 éléments où lesdits éléments sont choisis parmi azote, carbone, oxygène et soufre ;
ou un sel acceptable de ceux-ci acceptable au niveau agricole
(b) une quantité antidote efficace d'un composé antidote qui est efficace sur le plan antidote pour ledit tétrazolinone, où le composé antidote est un composé choisi parmi ester méthylique d'acide diphénylméthoxy acétique, acide diphénylméthoxyacétique et acide 3,3-diphénylpropionique.

2. Composition herbicide selon la revendication 1, où le composant (a) et un tétrazolinone de formule I(a) 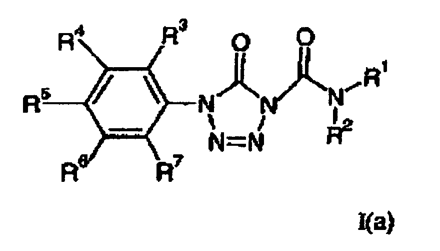 dans laquelle R¹ et R² sont les mêmes ou différents et sont choisis parmi hydrogène, alkyle C₁-C₁₂ éventuellement substitué, alkényle C₃-C₆ éventuellement substitué, alkoxyalkyle C₂-C₁₃ éventuellement sustitué, haloalkyle C₁-C₁₂ éventuellement substitué et C₅-C₆ cycloalkyle éventuellement substitué ; et
R³, R⁴, R⁵, R⁶ et R⁷ sont les mêmes ou différents et sont choisis parmi hydrogène, halogène, C₁-C₁₂ alkyle éventuellement substitué, C₂-C₁₃ alkoxyalkyle éventuellement substitué, C₂-C₁₃ alkoxyalkyle éventuellement substitué, C₁-C₁₂ haloalkyle éventuellement substitué et C₅-C₆ cyclalkyle éventuellement substitué.

3. Composition herbicide selon la revendication 1, où le composant (a) est un tétrazolinone de formule I(b) 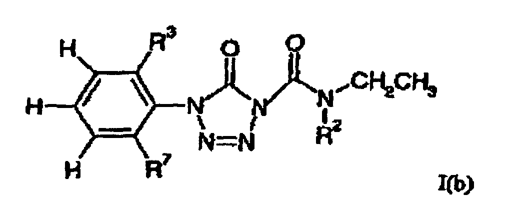 dans laquelle R3 est chloro ou éthyle ; R7 est hydrogène ou chloro et R2 est éthyle ou cyclohexyle ; ou un sel de celui-ci acceptable sur le plan agricole.

4. Procédé pour réduire les dommages causés à des cultures par un herbicide au tétrazolinone, lequel consiste en l'application au sol, à la culture ou à la semence d'une quantité non phytotoxique et efficace comme antidote d'un composé antidote qui est efficace comme antidote pour ledit herbicide au tétrazolinone, où ledit composé antidote est un composé choisi parmi ester méthylique d'acide diphénylméthoxy acétique, acide diphénylméthoxyacétique et acide 3,3-diphénylpropionique.

5. Procédé selon la revendication 4, où la culture est de maïs, de blé, de riz ou de soja.

6. Procédé selon l'une quelconque des revendications 4 et 5, où l'herbicide au tétrazolinone a la formule 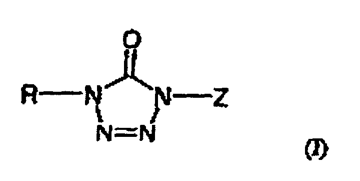 dans laquelle :
R est hydrogène, C₁-C₁₂ alkyle éventuellement substitué, C₂-C₁₃ alkoxyalkyle éventuellement substitué, C₁-C₁₂ haloalkyle éventuellement substitué, C₇-C₉ aralkyle éventuellement substitué, C₅-C₆ cycloalkyle éventuellement substitué, C₃-C₁₂ alkényle éventuellement substitué, aryle éventuellement substitué ou hétéroaryle éventuellement substitué.
Z est hydrogène, C₁-C₅ alkylcarbonyle, C₂-C₅ alkoxycarbonyle, S(O)ₙ phényle éventuellement substitué ou C(O)NR¹R² où R¹ et R² sont les mêmes ou différents et sont choisis parmi : hydrogène C₁-C₆ alkyle éventuellement substitué, C₃-C₆ alkényle éventuellement substitué, C₅-C₆ cycloalkyle éventuellement substitué et C₇-C₉ aralkyle éventuellement substitué ; n est 0, 1 ou 2 ; ou bien
R¹ et R² pris ensemble avec l'azote auquel ils sont fixés forment un noyau hétérocyclique saturé ou insaturé éventuellement substitué à 5 ou 6 éléments où lesdits éléments sont choisi parmi azote, carbone, oxygène et soufre;
ou un sel acceptable de ceux-ci acceptable au niveau agricole.
